# EUROPEAN PATENT APPLICATION

(11) **EP 1 489 349 A1**
(43) Date of publication of application: **22.12.2004**
(21) Application number: 03253911.6
(22) Date of filing: 20.06.2003
(51) Int. Cl.: F17C 13/00

(54) **A container for pressurised gas**

(71) Applicant: AIR PRODUCTS AND CHEMICALS, INC., Allentown, PA 18195-1501 (US)
(72) Inventor: The designation of the inventor has not yet been filed
(74) Representative: Burford, Anthony Frederick

(57) **Abstract**

An exterior impact and abrasion resistant protective coating (14) is provided on the surface of the vessel (12) having information (16, 18, 20) provided on the exterior surface thereof to form a container (10) for storing and dispensing gas under pressure. The coating (14) is sufficiently transparent such that said information (16, 18, 20) is visible through the coating (14). One advantage of the invention is that any labels (16, 18, 20) on which the information is provided are protected against abrasion and other damage that would otherwise obscure the information thereby reducing the frequency with which the labels (16, 18, 20) need to be replaced.

## Description

The invention relates to coated containers for storing and dispensing pressurised gas, in particular but not necessarily limited to pressurised gas cylinders.

Pressurised gas containers are usually painted with a protective coating of either conventional "wet" paints, for example those applied with a brush or air-spray, or powder paints, for example those that are electrostatically charged and then cured on to the container to form an enamel finish.

The colour of the paint used typically provides an indication of the composition of the gas stored within the container. In addition to the colour of the paint used, labels are usually applied to the painted container to provide information regarding the gas within the container, for example information concerning its composition and/or health and safety information. Other labels may be applied to the container to provide instructions regarding filling and shipping. The information may be in the form of, for example, plain writing, a bar code, a product code or an electronic tag. In any event, the labels must be kept legible and in good condition for safe operation of the gas container.

When transported and handled, for example during their frequent journeys between their point of use and a re-fill station, gas containers are subjected to many impacts resulting in abrasion of the paint and/or any label provided on the container. Such impacts result in flaking and/or chipping of the paint and cutting, tearing, abrasion or other damage to the labels.

For all types of container, such abrasions may compromise the appearance of the paint colour and may attract grime and dirt thereby making it difficult to maintain the container with a clean and hygienic appearance. These considerations are particularly important in the medical and food industries, especially where the identifying colour of the container is white. For mild steel cylinders, such abrasions into the paint, which may reach the exterior surface of the cylinder, provide an initiation point for corrosion. For composite fibre wrapped lightweight high pressure cylinders, cuts or other damage to the composite fibres may affect the pressure integrity of the cylinder. Presently, manufacturers apply a thin gel coating to the outside of such containers. However, such coatings are brittle and susceptible to hairline cracks when subjected to the routine handling operations during rotation between point of use and refill.

In addition to these drawbacks, damaged labels are often difficult to read making operation of the container unsafe. This consideration is particularly important in the medical, laboratory and food industries where there are special labelling requirements. It is a legal requirement that labels are legible. Therefore, a cylinder having damaged labels may not satisfy the relevant legal requirements.

One solution to these problems is to frequently repaint the container and to apply fresh labels to the repainted container at a refurbishment station. However, this solution is time consuming, labour intensive and has an associated operational cost. Further, a container may be mis-labelled in error with very serious consequences, especially in the medical, laboratory and food industries.

Plastic coatings have been used to protect the exterior of gas containers. For example, a sleeve of PVC has been used to protect the fibres of a composite fibre wrapped lightweight high pressure cylinder. In addition, cylinders for scuba diving have been coated with a polyurethane material to protect the cylinder from corrosion. The colour of such a polyurethane coating on scuba diving cylinders is incidental to cylinder identification. To date, identification labels have been applied to the outside of such coatings. Therefore, whilst the cylinders are protected from impact abrasion resulting in, for example, corrosion or a reduction in the pressure integrity of the cylinder, the labels have not been so protected. There is a need, therefore, for a protective coating that not only protects the gas container itself but also protects any information provided on the exterior surface of the container.

According to a first aspect of the present invention, there is provided a container for storing and dispensing gas under pressure, said container comprising a vessel having information provided on the exterior surface thereof and an exterior impact and abrasion resistant protective coating that is sufficiently transparent such that said information is visible through the coating. The information is visible, for example, by eye, by image scanners such as laser bar code scanners or by electronic tag readers. The coating is preferably clear and colourless. However, clear and coloured coating may be employed.

Such a coating not only protects the vessel itself from corrosion or other damage but also protects the information provided on the vessel. Consequently, the information on the vessel does not need to be replaced as often as in conventional vessels thereby reducing the time that the container is not in use due to refurbishment or retesting which in turn reduces the labour involved in refurbishment and lowers operational costs.

The vessel is suitable for storing and dispensing gas under pressure and, thus, it will comprise suitable valve means. The present invention is particularly useful for protecting pressurised gas cylinders. Therefore, within the scope of the present aspect, the invention preferably comprises a coated pressurised gas cylinder comprising a pressurised gas cylinder having information provided on the exterior surface thereof and an exterior impact and abrasion resistant protective coating that is sufficiently transparent such that said information is visible through the coating.

The invention is applicable to all steel, aluminium, hoop wrapped and fully wrapped gas cylinders or tanks for use in, for example, medical, laboratory, electronics and specialist gas and breathing applications. In addition, the invention is applicable for use in protecting all such cylinders or tanks where the outside surface must be clean, hygienic and washable. The invention is user friendly and allows safe manipulation and storage of gas containers. The coating can be heat and fire resistant and provide protection from chemical attack.

One advantage of the invention is that the coating may be applied to untreated gas containers, painted gas containers and composite fibre containers provided with a protective resin layer. The coating may encapsulate the entire vessel, including a hemispherical base if present, or may be in the form of a sleeve around the body of the container. The coating may also be provided over a container having a sleeve that provides a specialist container identification colour and/or colour-label combination or that separates the polyurethane coating from any composite resin on the gas container to prevent a chemical reaction.

The coating is preferably monolithic, seamless and impermeable. For certain applications, the coating may be chemically resistant. For example, the fibres of a composite fibre container are bonded with a resin. If the resin were susceptible to chemical attack then the integrity of the container would be affected if the resin were to be attacked chemically. In certain embodiments, the coating of the present invention is chemically resistant and thus protects the composite fibre resin from chemical attack.

Information can be provided on the exterior surface of the vessel in many ways as discussed above. For example, the colour of the paint used to paint the vessel can denote the contents of the vessel. Where the information is provided on at least one label, the coating also prevents damage to the or each label. One advantage of this protection is that the labels do not need to be replaced as often as they do if they are applied to the exterior of a container as the or each label remains clean, undamaged and therefore legible for a longer period of time.

The coating may comprise a polyurethane material. In preferred embodiments, the polyurethane material is solvent-free, i.e. there is no solvent available for dissolving the basic material and there is no vapour after reaction.

In this aspect of the present invention, the polyurethane material must be sufficiently transparent such that information present on the exterior surface of the vessel is visible through the material. The polyurethane material preferably maintains its transparency throughout the life of the coating, without affecting the colour of the container surface or legibility of labels beneath the coating.

Discolouration of the coating, for example by exposure to UV radiation, might change the apparent colour of the surface of the cylinder or the legibility of labels, etc. beneath the coating. In this aspect of the present invention, the polyurethane material is preferably sufficiently UV-resistant such that the transparency of the coating is not affected for the life of the coating.

According to the optical standard, a colour has three basic components; red, green and blue ("RGB"). For example, black is 0% RGB and white is full RGB. The "yellowing index" is a ratio of individual basic colours causing a yellowing of the colour. The yellow colour is 50% red and 50% blue. If one takes blue colour from white colour, the remaining colour becomes more yellow.

The yellowness index for coating according to the present invention has been measured in accordance with the American Society For Testing and Materials' Standard Test Method for the Yellowness Index of Plastics (ASTM D1925). For example, the yellowness index for the preferred polyurethane material described below (before application as a coating) is about 7. In general, the yellowness index of a coating immediately after application to the exterior a gas container is preferably no more than 20 and, more preferably, no more than 15. The yellowness index of a coating after 1000 h exposure to UV radiation preferably no more than 60, more preferably no more than 30 and still more preferably no more than 20. In preferred embodiments, the yellowness index does not increase by more than 50% over the lifetime of the coating.

Typically, a gas container, e.g. a cylinder, will have at least one colour provided on the exterior surface thereof. Preferably, UV radiation does not discolour the coating such that the proportion of each colour component changes by more than ± 5%. For example, a colour having 10% red, 70% green and 20% blue (total 100%), provided on the exterior of the surface of the container, will not appear to change (due to UV discolouration of the coating) by more than 10±5% red, 70±5% green and 20±5% blue (total 100%). More preferably, the change is no more than ±1% and, still more preferably, there is substantially no change.

In this aspect of the invention, the polyurethane material is impact and abrasion resistant. Suitable polyurethane materials have a Shore hardness of between from 60A (soft rubbery elastomer) to 75D (hard rigid). In a particular embodiment, the polyurethane material harness is about Shore92A or equivalent Shore43D.

Aromatic polyurethane materials may be used although aliphatic polyurethane materials are preferred due to their increased resistance to discolouration following exposure to UV radiation. Preferably, the aliphatic polyurethane is non-thermoplastic elastomer based on aliphatic isocyanates (for example, hexamethylene diisocyanate (or "HDI") and isophorone diisocyanate (or "IPDI")) and polyester polyols and catalyst blending mixture. In one preferred embodiment, the polyurethane material is made from PU1822 (an aliphatic polyisocyanate from Bayer AG Polyurethanes Group of Gebaude, D-51368 Leverkusen, Germany), KE9806 and KE9807 (a polyol and catalyst blending mixture respectively from RheinChemie Rheinau GmbH of Dusseldorf strasse 23-27, D-68219 Mannheim, Germany).

Polyurethane coatings have the additional advantage in that they are easy to keep clean, for example by wiping down or washing, using detergents, disinfectants, chemical cleaners and/or suitable solvents. This advantage is particularly significant in the medical and food industries where hygiene is critical. Further, a polyurethane coating may aid legibility of the or each label provided under the coating due to magnification of the information provided on the label resulting from refraction of light through the coating and, if the container is curved, for example as in a gas cylinder, from the curvature of the containers surface. In addition, such coatings provide a slick surface finish and secure handling contact, even through gloves.

Polyurethane materials have been used in the past on print rollers in the printing industry and as pipe coatings in the chemical industry. The thickness of such conventional coatings is usually larger than 1 cm. For example, when the coating begins to wear, the usual solution is to simply apply a further layer which increases the thickness of the coating. The coating of the present invention preferably has a thickness of between from about 1 mm to about 10 mm and may be applied using conventional techniques such as rotational casting.

The impact and abrasion resistant coating will need to be removed from time to time, for example at the end of the life of the coating. Sometimes the coating may be removed to retest the pressure integrity of the vessel. Whilst it is technically possible to remove polyurethane coatings using conventional techniques, one would not normally consider doing so as it is so difficult and labour intensive. Instead, a new layer of polyurethane material is usually applied to the existing coating. Disadvantageously, this has the effect of increasing the thickness of the layer.

Although it is possible to use a sharp knife to cut the coating, extreme caution must be exercised, especially if the coating is to be removed from a composite fibre container. The pressure integrity of such a container can be affected significantly if even a small number of the fibres are damaged.

In order to address this problem, the container preferably further comprises coating release means to facilitate removal of the coating from the vessel. Such coating release means may comprise a release agent provided under at least a portion of the coating to prevent adherence of said portion of the coating to the exterior of the vessel. Any suitable grease chemical may be used as a release agent. Additionally or alternatively, the coating release means may comprise a coating cutter wire provided underneath the coating and extending at least from one end of the coating substantially along the length of the vessel. At least a portion of such a coating cutter wire preferably extends substantially parallel to the longitudinal axis of the vessel as this arrangement allows the coating to be cut along the length of the vessel thereby further facilitating removal of the coating. The coating cutter wire is preferably steel wire having a diameter of between from about 0.1mm to about 0.5mm. An adhesive tape may be provided between the wire and exterior surface of the vessel to ensure that the wire remains in position during application of the coating to the vessel. As a coating cutter wire cuts from the inside surface of the coating to the outside surface, the risk of damaging fibres on a composite fibre container is reduced.

According to a second aspect of the present invention, there is provided a method of removing the protective coating from a container of the first aspect further comprising a coating cutter wire, said method comprising pulling the coating cutter wire away from and along the length of the vessel to cut the coating and then pulling the resultant cut-coating from the vessel.

According to a third aspect of the present invention, there is provided use of a transparent polyurethane material to form an impact and abrasion resistant protective coating on a vessel for storing and dispensing pressurised gas.

According to a fourth aspect of the present invention, there is provided use of a cutter wire to remove an impact and abrasion resistant protective coating from a vessel for storing and dispensing gas under pressure.

According to a fifth aspect of the present invention, there is provided a container for storing and dispensing gas under pressure, said container comprising a vessel, an impact and abrasion resistant protective coating provided on the exterior of the vessel and coating release means to facilitate removal of the coating from the vessel. Such a vessel typically has information provided on the exterior surface thereof. In such embodiments, the coating is preferably sufficiently transparent such that the information is visible through the coating. Such containers may comprise any or all of the features described above in any combination.

According to a sixth aspect of the present invention there is provided a container for storing and dispensing gas under pressure, said container comprising a vessel and an exterior impact and abrasion resistant protective coating characterised in that the coating comprises a polyurethane material. Preferably, the polyurethane material is clear and colourless although coloured polyurethane materials, both clear and opaque, are possible. The polyurethane resin may have any or all of the features discussed above in any combination.

The invention will now be described, by way of example only, with reference to the accompanying drawings. In the drawings:
FIGURE 1 is a diagrammatic representation of an embodiment of the present invention;
FIGURE 2 is a cross-sectional view through a vertical portion of the wall of the container depicted in Figure 1;
FIGURE 3 is a cross-sectional view through a horizontal portion of the container depicted in Figure 1; and
FIGURE 4 is a diagrammatic representation of two stages of removal of the coating from the container depicted in Figure 1.

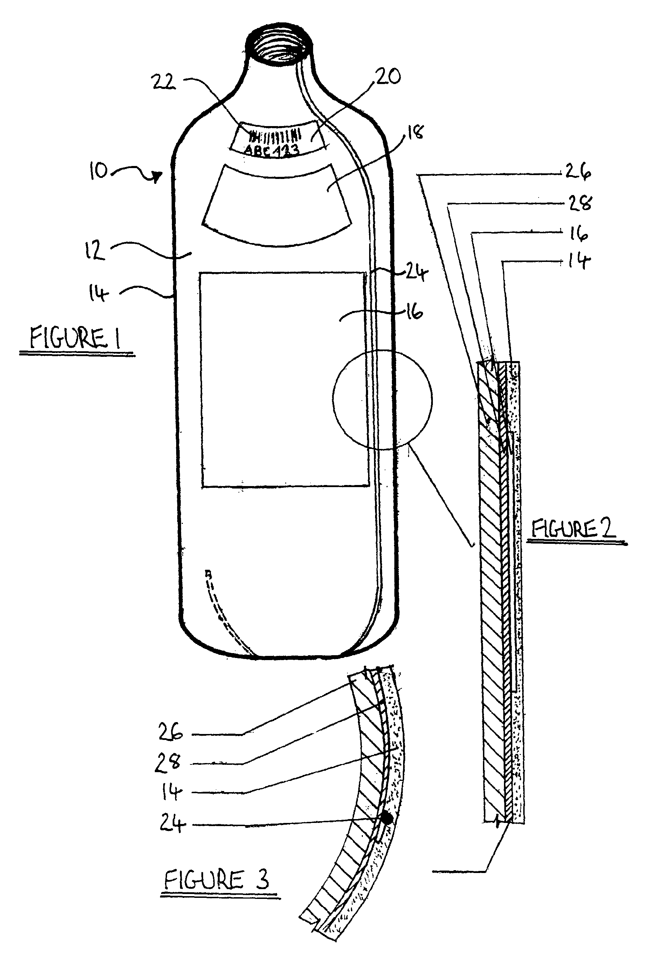

Referring to Figure 1, a container 10 comprises a pressurised gas cylinder 12 having an impact and abrasion resistant protective coating 14 provided on the exterior surface thereof. The coating 14 is sufficiently transparent so that the labels 16, 18, 20 are visible through the coating 14. Label 20 has a bar code 22 that is readable through the coating 14 using a laser bar code scanner (not shown). A coating cutter wire 24 is provided from one end of the coating 14 at the neck of the cylinder 12 along the length of and substantially parallel to the longitudinal axis of the cylinder 12. The coating cutter wire 24 extends around the base of the cylinder 12 and a portion of the length of the opposite side of the cylinder 12.

The portion of the wall of the container 10 indicated by a circle in Figure 1 is depicted as a vertical cross section in Figure 2. The wall 26 of the cylinder 12 is coated with a layer 28 of paint or a thin plastic sleeve 28. The label 16 is provided on the layer or sleeve 28. Information is provided on the label 16. The transparent impact and abrasion resistant polyurethane coating 14 is provided over the label 16 and the layer or sleeve 28.

The portion of the wall of the container 10 indicated by the circle in Figure 1 is depicted as a horizontal cross section in Figure 3. The wall 26 of the cylinder 12 is coated with a layer 28 of paint or a thin plastic sleeve 28 which in turn will usually have information provided thereon. A coating cutter wire 24 with adhesive tape is provided along the length of the cylinder 14 and the transparent impact and abrasion resistant polyurethane coating 14 is provided over the layer or sleeve 28 and the wire 24.

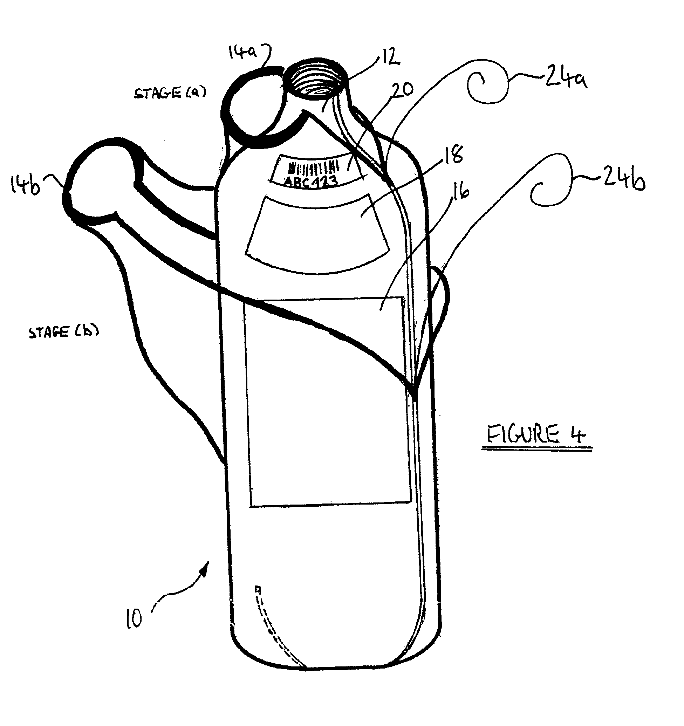

The coating 14 of the container 10 depicted in Figure 1 is removed in the manner depicted in Figure 4. In this figure, two stages of the removal of the coating 14 from the cylinder 12 having labels 16, 18, 20 are depicted. In Stage (a), the free end of the coating cutter wire 24a is pulled away from the end of the coating 14 at the neck of the cylinder 12 in order to cut into the coating 14. In Stage (b), the free end of the coating cutter wire 24b is pulled partially along the length of the cylinder 12, cutting the coating 14 as it is pulled free of the cylinder 12. The cut portions of the coating 14 can be removed from the cylinder 12 as illustrated. The remaining portion of the cutter wire 24 is pulled free of the cylinder 12 (not shown) to complete the cutting of the coating 14 and the cut coating is simply pulled free of the cylinder 12. The labels may now be removed and replaced and the cylinder refurbished and/or retested as required and recoated.

### Example 1

A polyurethane material was prepared from PU1822 (aliphatic polyisocyanate), KE9806 (polyol) and KE9807 (catalyst blending mixture). The yellowness index of the material was measured (ref. ASTM D1925). The material was then applied as a coating to a gas cylinder and the yellowness index of the coating was measured. The coating was exposed to UV radiation for 1000 h and the yellowness index of the coating was remeasured. The results are indicated in Table 1.

| | Yellowness Index (ASTM D 1925) |
|---|---|
| Polyurethane material | 7.105 |
| Coating (t=0 h) | No more than 20 |
| Coating (t=1000 h) | Less than 60 |

Throughout the specification, the term "means" in the context of means for carrying out a function, is intended to refer to at least one device adapted and/or constructed to carry out that function.

It will be appreciated that the invention is not restricted to the details described above with reference to the preferred embodiments but that numerous modifications and variations can be made without departing from the spirit or scope of the invention as defined by the following claims.

## Claims

1. A container (10) for storing and dispensing gas under pressure, said container (10) comprising a vessel (12) having information provided on the exterior surface thereof and an exterior impact and abrasion resistant protective coating (14) that is sufficiently transparent such that said information is visible through the coating.

2. A container (10) as claimed in Claim 1 wherein at least some of said information is provided on at least one label (16, 18, 20), said coating preventing damage to the or each label (16, 18, 20).

3. A container (10) as claimed in Claim 1 or Claim 2 wherein the coating (14) comprises a polyurethane material.

4. A container (10) as claimed in Claim 3 wherein the polyurethane material is an aliphatic polyurethane.

5. A container (10) as claimed in Claim 3 or Claim 4 wherein the polyurethane material is made from an aliphatic isocyanate and a polyester polyol using a catalyst.

6. A container (10) as claimed in any of Claims 3 to 5 wherein the polyurethane material is made from PU1822 (aliphatic polyisocyanate), KE9806 (polyol) and KE9807 (catalyst blending mixture).

7. A container (10) as claimed in any of the preceding claims wherein the coating is chemically resistant.

8. A container (10) as claimed in any of the preceding claims wherein the coating is clear and colourless on application to the exterior surface of the vessel.

9. A container (10) as claimed in any of the preceding claims wherein the yellowness index (measured according to ASTM D1925) of the coating is no more than 20 at t=0 h.

10. A container (10) as claimed in any of the preceding claims wherein the yellowness index of the coating is no more than 60 at t=1000 h of exposure to UV radiation.

11. A container (10) as claimed in any of the preceding claims wherein the yellowness index of the coating does not increase by more than 50% during the lifetime of the coating.

12. A container (10) as claimed in any of the preceding claims wherein the coating (14) has a thickness of between from about 1mm to about 10mm.

13. A container (10) as claimed in any of the preceding claims further comprising coating release means (24) to facilitate removal of the coating from the vessel (12).

14. A container (10) as claimed in Claim 13 wherein the coating release means comprises a coating cutter wire (24) provided underneath the coating (14) and extending at least from one end of the coating (14) substantially along the length of the vessel (12).

15. A container (10) as claimed in Claim 14 wherein at least a portion of the coating cutter wire (24) extends substantially parallel to the longitudinal axis of the vessel (12).

16. A container (10) as claimed in Claim 14 or Claim 15 wherein the coating cutter wire (24) is steel wire having a diameter of between from about 0.1mm to about 0.5mm.

17. A container (10) as claimed in any of Claims 13 to 16 wherein the coating release means comprises a release agent provided under at least a portion of the coating (14) to prevent adherence of said portion of the coating to the exterior of the vessel (12).

18. A container (10) as claimed in any of the preceding claims wherein the vessel (12) is a pressurised gas cylinder.

19. A container (10) substantially as hereinbefore described with reference to the accompanying drawings.

20. A coated pressurised gas cylinder (10) comprising a pressurised gas cylinder (12) having information provided on the exterior surface thereof and an exterior impact and abrasion resistant protective coating (14) that is sufficiently transparent such that said information is visible through the coating (14).

21. A coated pressurised gas cylinder (10) substantially as hereinbefore described with reference to the accompanying drawings.

22. A method of removing the protective coating (14) from the container (10) of Claim 14, said method comprising pulling the coating cutter wire (24) away from and along the length of the vessel (12) to cut the coating (14) and then pulling the resultant cut-coating from the vessel (12).

23. Use of a transparent polyurethane material to form an impact and abrasion resistant protective coating (14) on a vessel (12) for storing and dispensing pressurised gas.

24. Use of a cutter wire (24) to remove an impact and abrasion resistant protective coating (14) from a vessel (12) for storing and dispensing gas under pressure.

25. A container (10) for storing and dispensing gas under pressure, said container (10) comprising a vessel (12), an impact and abrasion resistant protective coating (14) provided on the exterior of the vessel (12) and coating release means (24) to facilitate removal of the coating (14) from the vessel (12).

26. A container (10) as claimed in Claim 25 wherein the vessel (12) has information provided on the exterior thereof, said coating (14) being sufficiently transparent such that said information is visible through the coating (14).

27. A container as claimed in Claim 26 wherein the container (10) further comprises any one, some or all of the features defined in any of the preceding claims.

28. A container for storing and dispensing gas under pressure, said container comprising a vessel and an exterior impact and abrasion resistant protective coating **characterised in that** the coating comprises a polyurethane material.

29. A container as claimed in Claim 28 wherein the polyurethane material is clear and colourless

30. A container as claimed in Claim 28 wherein the polyurethane material is either clear and coloured or opaque and coloured.
